(19) Europäisches Patentamt
European Patent Office
Office européen des brevets

(11) **EP 2 504 286 B1**

(12) **EUROPEAN PATENT SPECIFICATION**

(45) Date of publication and mention
of the grant of the patent:
**21.08.2019  Bulletin 2019/34**

(21) Application number: **10749901.4**

(22) Date of filing: **12.07.2010**

(51) Int Cl.:
*C02F 11/14* (2019.01)          *C02F 11/00* (2006.01)
*C02F 1/36* (2006.01)           *C02F 103/06* (2006.01)
*C02F 1/68* (2006.01)

(86) International application number:
**PCT/HR2010/000021**

(87) International publication number:
**WO 2011/015889 (10.02.2011 Gazette 2011/06)**

(54) **PROCESS FOR TREATMENT OF CONCENTRATED SOLUTIONS ORIGINATING FROM LANDFILL LEACHATE**

VERFAHREN ZUR BEHANDLUNG KONZENTRIERTER LÖSUNGEN AUS DEPONIE-SICKERWÄSSERN

PROCÉDÉ DE TRAITEMENT DE SOLUTIONS CONCENTRÉES DE LIXIVIATS À PARTIR DES DÉPÔTS DE DÉCHÊTS

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority:  **03.08.2009  HR 20090425**

(43) Date of publication of application:
**03.10.2012  Bulletin 2012/40**

(73) Proprietor: **Spanovic, Milli**
**10000 Zagreb (HR)**

(72) Inventor: **Spanovic, Milli**
**10000 Zagreb (HR)**

(74) Representative: **Paustian, Othmar**
**Boeters & Lieck**
**Patentanwälte**
**Oberanger 32**
**80331 München (DE)**

(56) References cited:
**WO-A1-2008/130208      DE-A1- 4 200 598**
**FR-A1- 2 904 622        GB-A- 2 356 195**
**US-A- 4 917 733**

• **RENOU ET AL: "Treatment process adapted to stabilized leachates: Lime precipitation-prefiltration-reverse osmosis" JOURNAL OF MEMBRANE SCIENCE, ELSEVIER SCIENTIFIC PUBL.COMPANY. AMSTERDAM, NL, vol. 313, no. 1-2, 22 November 2007 (2007-11-22), pages 9-22, XP022526527 ISSN: 0376-7388 DOI: DOI:10.1016/J.MEMSCI.2007.11.023**

**Description**

1. FIELD THE INVENTION

Innovation pertains to a process used to treat drained waste waters originating from communal and industrial waste. It is a part of physical and chemical treatment of materials during solidification based on calcium.

Drained waste waters are result of condensation and outdoor influences like snow and rain at the dump site. Such waste waters contain toxic components and need to be collected and treated. Prevailing ecological problems are contents based on nitrogen, chlorine and phenol as well as heavy metals like arsenic and chromium.

Solutions originating from waste waters can be separated by free-fall or canals, or by filtration and osmosis. Final result of filtration is molecular water that is tightly connected to the structure of waste material. It is called super-concentrate. Such super-concentrated solutions are a serious ecological problem.

2. TECHNICAL PROBLEM

Solidification based on calcium is a well known and widely used technology and it is successful as a treatment of industrial and communal waste. The final product of solidification is a less toxic material, transformed into a more suitable dry, powdery material.

A common way to treat liquid materials with solidification includes reactants based on calcium: $Ca(OH)_2$, CaO, $CaCO_3$, and MgO; mainly $Ca(OH)_2$ + CaO.

Liquid mud, however, requires a treatment with more reactants; more evaporation, higher temperatures and the final result are bigger quantities of solidificate.

Shortcomings of such treatment are the increased contents of heavy metals (lead Pb; chromium Cr; zinc Zn; cadmium Cd; arsenic As) and organic carbon (TOC). Nitrogen and chlorine are still too high, as are the amounts of soluble substances in the water. Solidificate can also contain too much moisture, which jeopardizes its quality and further usage (in cement works, etc).

For these reasons, solutions of waste waters are usually treated separately with cleansers in other facilities. That is a very expansive procedure.

Waste waters originating from dump sites are particularly dangerous because they contain big amounts of ammonia and chlorine. Finally, such liquid has over 95% of molecular water, post dehydration.

Exothermic reaction of calcium oxide does not create enough energy to free molecular water and to successfully conduct solidification. The final product does not meet the required standards.

Because of this technical problem, solidification is not used on waste waters. Practice has shown that it requires too much of reactants based on calcium.

3. STATE OF TECHNIQUE

The most common ecological treatment of dangerous waste that improves material's physical and chemical characteristics, making it more environmentally suitable is solidification. Solidification transforms liquid and oily materials, as well as mud, into a powdery form.

Solidification and incineration are the main interventions regarding dangerous waste with high content of hydrocarbon.

The latest European regulations, however, make incineration undesirable because incinerators pollute the air (dioxins, furans, hydrocarbon, nitrogen compounds, etc.) There are other ways to treat dangerous waste with additives like oleic and stearic, heavy acids, etc. But they are not widely used because they are expensive and create lots of solidificate.

Author of this innovation is also the author of technological treatment of waste that besides calcium oxide (CaO) also uses:

a) Created solidificate instead of calcium hydroxide [$Ca(OH)_2$],
b) Recirculation system for created solidificate with increased overall energy
c) Magnetic field, created in the part of facility designed for molecular dissociation. It increases the energy of the chemical reaction
d) Ultrasound technology for homogenization of liquid waste

WO 2008/130208 A1 D1 discloses a solidifying agent, which may comprise 70 - 90 wt% quicklime, for solidifying sewage or waste water sludge. This solidifying agent causes not only solidification hut also foaming expansion. The solidified sewage or waste water sludge is then naturally cured or dried for a predetermined period of time, resulting in solidified sludge. This dried and solidified sludge is a construction material which may be used e. g. as waste landfill cover material or as a (second) solidifying agent for solidifying sewage or waste water sludge by mixing it with the (first) solidifying agent according to the disclosed invention at an appropriate mixing ratio.

From GB 2 356 195 A it is also known to mix waste with quicklime in order to solidify the waste and to put the obtained solid end product to subsequent use, for example it may be stored in a landfill site or may be partially recycled to fulfil the function of an absorbent. In case of waste of solid consistency, also the partially treated waste may be - after remaining in an ageing tank for several hours - mixed with the waste and quicklime and further compounds.

From DE 42 00 598 A1 it is known to mix aqueous waste with quicklime and to absorb pollutants contained in the evaporating water in an acid apparatus which in turn will be connected to the waste water and quicklime input of the process/device.

## 4. PRESENTATION OF THE ESSENCE INVENTION

The process according to the present invention is defined in the appended claim. This process is for treatment of waste solutions originating from dump sites. It is designed to increase drying, evaporation and cooling of material during solidification; particularly solidification with calcium oxide and reused solidificate. Reused solidificate enters the process instead of calcium hydroxide (25-30%). Solidificate moves turbulently and forward in the second part of its path.

Possible ways: a) plain screw conveyor, b) segmented screw conveyor, c) conveyor belt or d) paddle-shaped conveyor.

All of the above mentioned methods disperse the solidificate and enable its cooling and evaporation. The longer the movement, the better are the results. The capacity of treatment can range from 4 to 50 $m^3$/h of waste. The length of moving path should depend on the capacity parameters.

Solutions of waste waters are collected by canals from the dump site. Physical water is removed by filtration and dehydration. Osmosis is used to concentrate the substance. Repeated filtration, dehydration and osmosis create so-called super-concentrate.

Such concentrated liquid undergoes homogenization by ultrasound. Homogenized, concentrated liquid goes through, hot solidificate before entering pre-mixer. This increases the energy required by the process.

Reused hot solidificate ($\approx$ 30%) enters the pre-mixer at the same time. We add calcium oxide ($\approx$ 10%) to the mixture. Created mud continues its treatment in the first reactor's unit. And here is where we add more calcium oxide ($\approx$ 10%). The last addition of calcium oxide ($\approx$ 10%) is added in the second reactor's unit with installed magnetic field and vacuum gaseous encapsulation. Water steam is returned into the process by filters, while gaseous contents are cleansed with sulfuric acid. Gaseous output is ecologically pure. The muddy remnants arc returned into the process.

One portion of the solidificate ($\approx$ 50%) is reused in the process. What remains ($\approx$ 50%) undergoes drying and cooling, and it is the final product of treatment - solidificate as a neutral material suitable for further industrial usage.

Innovation is illustrated by:

Illustration 1. Blueprint of the facility
Illustration 2. Axonometric display of the facility

Furthermore:

Illustration 1. Schematic blueprint of all important parts within the facility and their interactive functions

Illustration 2. Axonometric display of the entire facility, showing the explained positions.

## 5. BRIEF DESCRIPTION OF THE EXPLOITATION OF INVENTION

Solution of drained waste waters 1, is collected into a collection system A, where it undergoes dehydration and osmosis. The result is a concentrated solution, which is homogenized by an ultrasound device B. Then, solution goes through pipes into a device for forming final, neutral solidificate N. In this case, the device's purpose is to transfer the heat from solidificate to the solution. Heated solution is pushed by pump D into a pre-mixer F.

This solution docs not dissolve easily so it remains in a liquid form for a long time. That is why we have to add reused solidificate into the pre-mixer and ensure intense mixing with calcium oxide. Pre-mixer' s bottom needs to be deep to provide appropriate distribution of material. Otherwise, larger quantities of material will not be properly mixed. There needs to be free space above the material, while in pre-mixer, so that the created chlorine and nitrogen gases can safely reach the filter's unit.

The solidificate 8. is still warm post treatment as it exits on screw conveyor K. It re-enters the process to replace calcium hydroxide and to provide heating energy. The remaining solidificate 9. follows a long, turbulent path through the device N, where it undergoes drying, evaporation and cooling. The final product is a quality solidificate 11., ready for further industrial usage.

We add warm, concentrated and homogenized waste solution 3. to the solidificate 8. in the premixer F.

This is where we create the mixture for treatment by adding CaO ($\approx$ 10 vol %).

As it moves towards the reactor's unit G, the mixture gains initial exothermic heat.

At this stage, we can observe the first phases of water steam evaporating and of the molecular water dissociating. We add more CaO ($\approx$ 10 vol %) 6- in the first reactor's unit G to start the second phase of molecular water dissociation as well as its initial evaporation. We finalize the dosing procedure by adding the remaining CaO ($\approx$ 10 vol %) 7. in the second reactor's line J. The molecular water ends the final phase of its dissociation.

The results are hot calcium hydroxide 8. that re-enters the process ($\approx$ 50 vol %), and solidificate 9. that undergoes drying, evaporation and cooling. The final product is a neutral solidificate, ready for further usage ($\approx$ 50 vol %).

Water steam and gaseous contents 10. are filtered in the unit S Particles re-enter the process. Gaseous contents are cleansed in scrubber T before entering the atmosphere. Filtering device S consists of at least 4 columns. Nominal pressure is approximately six bars for capacities up to 30.000 Nm7h. It collects particles bigger than $50 \mu m$.

Device designed to create magnetic field H is placed under the reactor's unit, in the area with the strongest molecular dissociation. It has a common construction with magnetic scroll and corrector for direct current, voltage 550 V, intensity of electricity 1,8 A.

The most intense molecular dissociation transpires around encapsulators 1.

We have to place magnetic scroll along the reactor's unit while handling bigger capacities or materials like solution of waste waters.

The strength of magnetic field, as magnetic induction, does not have to be bigger than 0.1 Tesla ($10^4$ Gaus) for capacities less than 20 $m^3/h$.

Vacuum encapsulators I are separate devices. They establish micro-explosions and create anions and cations, which in return create conditions needed for encapsulation of particles.

Ultrasound device used to homogenize solution of waste waters is a device generally used to homogenize fuel (tar-oil fuel).

## 6. DETAILED DESCRIPTION OF AT LAST ONE WAY USAGE OF INVENTION

Described material is a solution of drained waste waters originating from communal and industrial dump sites.

Such solution consists of:

- nitrogen (N) as nitrogen connected to hydrogen, ammonia, and nitrate, nitrite and nitrated hydrocarbon
- phosphor as phosphate, orthophosphate and organic phosphorus pesticide
- sulfur as sulfate, sulfite and sulfide
- chlorine as chloride, effective chlorine and organic chlorine pesticide
- hydrocarbon as aromatic hydrocarbon, nitrited hydrocarbon, halogen hydrocarbon, mineral oils and grease
- organic carbon (TOC)
- phenol ($C_6H_5OH$)
- metalloids, alkali, alkaline earth metals and heavy metals

Following table contains analysis information:

- before treatment (concentrate, super-concentrate)
- the final product - solidificate

| Solution of waste waters Concentrate | | | Solution of waste waters Super-concentrate | | Final product Solidificate | |
|---|---|---|---|---|---|---|
| pH | - | 7-9 | pH | 7-9 | pH | 12,1 |
| Conductivity | mS/cm | 41,2 | Conductivity | >1000 | Conductivity | 50 |
| Moisture, physical | % | 96 | Moisture, molecular | 99 | Moisture, total | < 5 |
| KPK | mg $O_2$/l | 12731 | | 63655 | | 125 |
| TOC | mg C/l | 1711 | | 8550 | | 30 |
| AOX | mg Cl/l | 10.7 | | 53,5 | | 0.5 |

| Hydrocarbons | mg CH /l | 154 | | 770 | | 25 |
|---|---|---|---|---|---|---|
| Cyan | mg $CN^-$/l | < 0.02 | | < 0.01 | | <0.01 |
| Phenol | mg Pf/l | 8.43 | | 42.2 | | <0.1 |
| Sulfur | mg S/l | 2.4 | | 12.0 | | - |
| Fluoride | mg F/l | 1.3 | | 6.5 | | <1 |
| Chloride | mg Cl/l | 6610 | | 33050 | | <50 |
| Nitrate | mg $NO_3^-$/l | <25 | | <125 | | <2 |
| Nitrite | mg $NO_2^{2-}$/l | <0.3 | | <1.5 | | <0.3 |
| Sulfate | mg $SO_4^{2-}$/l | 246.5 | | 1232.5 | | <100 |
| Bicarbonate | mg $HCO_3^{2-}$/l | 20440 | | 102200 | | - |
| Carbonate | mg $CO_3^{2-}$/l | <10 | | <50 | | - |

| Ammonia | mg NH$_4$/l | 5698 | | 28490 | | <0.1 |
|---|---|---|---|---|---|---|
| Soda | mg NHCO$_3$/l | 3357 | | 16785 | | - |
| Potash | mg K$_2$CO$_3$/l | 1278 | | 6390 | | - |
| Calcium | mg Ca/l | 27.9 | | 139.5 | | - |
| Magnesium | mg Mg/l | 89.7 | | 448.5 | | <1 |
| Barium | mg Ba/l | 0.36 | | 1.8 | | <0.1 |
| Borium | mg B/l | 20.9 | | 104.5 | | <1 |
| Manganese | mg Mn/l | 0.22 | | 1.1 | | <0.5 |
| Antimony | mg Sb/l | 0.06 | | 0.29 | | <0.01 |
| Arsenic | mg As/l | 2.63 | | 13.1 | | <0.1 |
| Cadmium | mg Cd/l | 0.001 | | 0.01 | | <0.01 |
| Cobalt | mg Co/l | 0.05 | | 0.27 | | <0.1 |
| Cooper | mg Cu/l | 0.02 | | 0.11 | | <0.01 |
| Chromium, total | mg Cr/l | 1.92 | | 9.58 | | <0.1 |
| Iron | mg Fe/l | 8.65 | | 43.27 | | <2 |
| Mercury | mg Hg/l | <0.0001 | | <0.001 | | <0.0001 |
| Nickel | mg Ni/l | 0.54 | | 2.69 | | <0.2 |
| Lead | mg Pb/l | 0.03 | | 0.14 | | <0.2 |
| Selenium | mg Se/l | 0.8 | | 4.0 | | <0.02 |
| Zinc | mg Zn/l | 0.26 | | 1.3 | | <0.2 |
| Aluminum | mg Al/l | 0.46 | | 2.3 | | <2 |

The Data shown for solidificate can be achieved with other sorts of waste if we apply technology described in this innovation.

Primary equipment for treatment of concentrated solution of waste waters: main collector A, heating changer B, device for ultrasound homogenization C and pump D.

Warm, concentrated solution of waste waters 3. enters premixer F where the reused solidificate 4. is mixed with calcium oxide 5. from silo E.

In the first phase, molecular water is released from the concentrated solution of waste water in the reactor's unit F. Calcium oxide 6. is added in the reactor's unit G.

In the second phase, molecular water is released as the solution enters reactor's unit J. this is where we add the last dose of calcium oxide 7., and this is where reused solidificate 8. is created with the help of magnetic field H and vacuum encapsulation I.

Upon its exit from reactor's unit J, part of solidificate 8, is reintroduced to the process by transporter K. Elevator L transports the remaining solidificate 9. into the device N, where it undergoes drying, evaporation and cooling.

Ventilators P and R push the gaseous contents and water steam 10. towards scrubber T and filter S. Particles collected here are returned back into the process.

Elevator O transports the final, neutral solidificate 11. to the containers or cisterns.

Solidificate as the final product easily drizzles, it is completely dry, has a faint odor and low specific weight ($0.8 < \gamma < 0.9$ g/dm$^3$). It is also hydrophobic, white to grayish white in color and it has high watertight coefficient $\kappa = 10^{-9}$ cm/s. It can be pressed (<40 bar) into briquettes without other additives.

Following example illustrates treatment of concentrated solution of waste waters:

- capacity of treatment: $\approx$10 t/h
- input temperature of heated solution: $\approx$40°C
- input temperature of reused solidificate: $\approx$70°C
- maximal temperature of solidificate in the process: $\approx$135°C
- average temperature of output solidificate: 35°C
- time the material moves within the facility: $\approx$12 minutes
- addition of calcium oxide: $\approx$3 t/h (30 %)
- addition of reused solidificate: $\approx$5 t/h (50 %)
- total amount of solidificate: $\approx$10.5 t/h
- amount of solidificate for shipment: $\approx$5.5 t/h
- evaporation and filtration of gaseous contents and water steam: $\approx$7.5 t/h

So, we can treat ≈10 tons of concentrated solution while spending ≈3 tons of calcium oxide, and our final product is ≈5.5 tons of neutral solidificate awaiting further industrial usage.

It is best to build this facility on several levels. Solidificate should move on the widest possible surfaces to slow it down and to ensure better evaporation.

Abovementioned example shows us that such facility can have two or three levels, occupy the surface of 50x10 meters and have 15 meters in height.

To calculate electric and motor transitions needed for screw conveyor, we have to know specifics about the solidificate. We also have to include other safety factors, such as: friction ($f_1$=1,3-1,4), glueyness ($f_2$=1,2-1,3), alignment of screw conveyor ($f_3$=1/sin$\alpha$), and gravity of solidificate over screw conveyor ($f_4$ = 1,1-1,2).

Calculation for the abovementioned example:

$$P = 2\pi \cdot F \cdot r \cdot n \ (kW)$$

$\sum F = \sum G$ (weight of material in conveyor + weight of axis + weight of screw spiral segment)·9,81 (kN)

$$F_{tot} \text{ (total force)} := \sum F \cdot (f_1 \cdot f_2 \cdot f_3 \cdot f_4)$$

r = radius of screw spiral segment (in meters)
n = axis rotation (in seconds)

Filter S has to be able to receive double the volume from the one specified in the calculation. It needs to thoroughly separate the particles and return them back into the process.

Gaseous contents created in premixer F, first G and second J reactors' lines, and in the device for drying, evaporation and cooling of solidificate, as well as on transporter K are all filtered in unit S. Therefore, pipes must be precisely designed and placed at these locations.

Scrubber T is using sulfuric acid. We have to anticipate triple the volume of flow from the one specified in the calculation. Sediments accumulated in the scrubber need to be removed once per month and returned to the process.

Premixer F, as well as the first G and second reactors J, require free space above the material to be as high as the maximal height of the material inside them.

Premixer and both of reactors have to be made of high quality alloyed chromium steel.

All devices require openings for control, cleaning and maintenance.

All transporters require sharp screw spiral segments to successfully handle material's glueyness and density, and to minimize the pressure on the motors as much as possible.

7. USAGE OF INVENTION

Innovation is used as follows:
Solution of waste waters free-falls or is collected with a pump from a pool A. Solution is then pushed into a device for drying, evaporation and cooling of solidificate, to be warmed by heating changer B. What follows is homogenization with ultrasound device C and transportation with pump D into premixer F. Jets are the best way to disperse the liquid over the interior of premixer F.

Treatment starts slowly since this material needs several circular motions to obtain qualities of solidificate necessary for further treatment. This lasts approximately fifteen minutes during which all concurrent devices are warmed up to the working temperature.

All the locations where molecular water is created require observation. Close to these locations, we have to add calcium oxide. Usually, there are three such locations: the end of premixer F, the middle of first reactor's line G and the beginning of the second reactor's line J. If molecular water appears sooner, we simply add less calcium oxide. If molecular water appears later, we add more calcium oxide. We can always precisely define where the molecular water will appear by regulating the amount of added calcium oxide.

Molecular water has to appear in phases and not at once. If all molecular water were to appear at once with big quantities of calcium oxide, we would not be able to control the huge amount of water in the process.

The best solidification is achieved within three lines of treatment F, G and J, and with three separate additions of calcium oxide at locations 5, 6, and 7.

One part of solidificate 8. is reintroduced into the process with screw conveyor K, while the remaining solidificate 9. is transported by elevator L to device N for drying, evaporation and cooling.

Capacities of treatment can be adjusted from the minimal 4 and over to 50 m$^3$/h. In the latter case, it is important to ensure logistics because we are handling large amounts of solidificate, water steam and other gaseous contents.

We especially have to control the gaseous content inside the reactors' units; because above the solid mixture with the highest specific weight (over 2.5 g/dm$^3$) there are gaseous chlorine contents (specific weight 1.47 g/dm$^3$) and above them are gaseous ammonia contents (specific weight 0.78 g/dm$^3$).

Filter system creates sub-pressure that prevents even the highest levels of gaseous content, mostly ammonia, to leak from reactors' units.

Water steam has the biggest share in total evaporation because molecular water from solution transfers into the water steam.

Ammonia and chlorine salts as well as complex compounds and heavy metals are successfully formed in the mass of stable and encapsulated solidificate.

Upon exiting the device N for drying, evaporation and cooling, neutral solidificate 9. is a dry and clean powder, which does not exceed allowed concentrations of elements and substances.

8. SUMMARY

Facility that is designed accordingly to this innovation successfully treats concentrated waste waters and solutions of drained waste waters originating from communal and industrial dump sites. This is economically and ecologically successful treatment with neutral solidificate as the final product. Solidificate is a dry, hydrophobic, clean, stable and neutral material.

Solution undergoes heating and homogenization by an ultrasound device. Solution is guided through pre-mixer and two reactors' units. Treatment requires additions of calcium oxide and reused solidificate.

We achieve complete dissociation, vacuum-gaseous encapsulation and solidification by increasing the energy of chemical reaction with magnetic field.

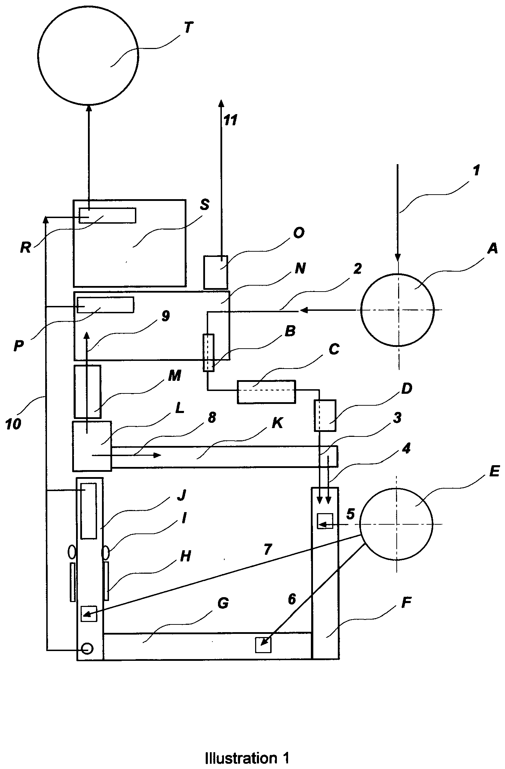

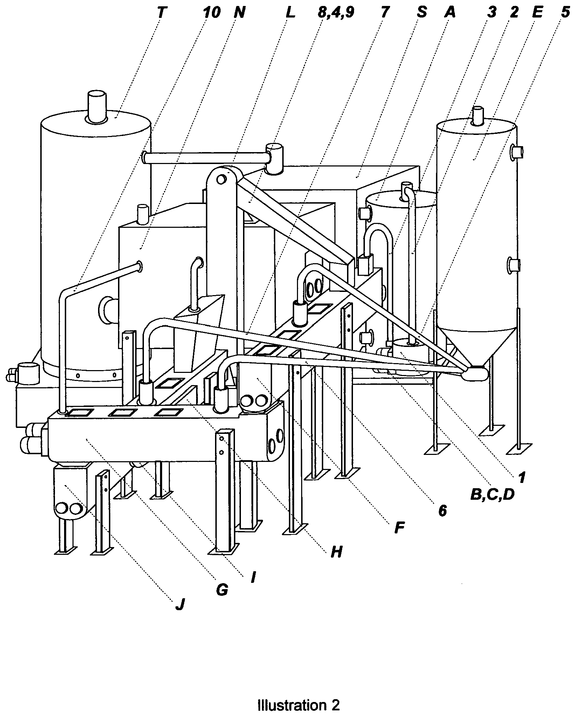

**Claims**

1. Process for treatment of concentrated solutions originating from drained waste waters from communal and industrial waste, comprising the steps of
   adding calcium oxide and reused solidificate to the concentrated solution thereby creating a solidificate;
   reintroducing into the process a portion (8) of the created solidificate; and
   taking the remaining portion (9) of the created solidificate by an elevator (L) to a device (N) for drying and cooling and for evaporation of water contained in the remaining portion (9) while drying same (9), creating thereby a neutral and stable solidificate (11) as the final product.

**Patentansprüche**

1. Verfahren zur Behandlung konzentrierter Lösungen aus Drän-Abwässern von kommunalen und industriellen Abfällen, mit den Schritten:

   Hinzufügen von Kalziumoxid und wiederverwendetem verfestigtem Material zu der konzentrierten Lösung, wodurch ein verfestigtes Material erzeugt wird;
   Zurückführen eines Teils (8) des erzeugten verfestigten Materials in das Verfahren; und
   Bringen des verbleibenden Teils (9) des erzeugten verfestigten Materials mittels eines Hebewerks (L) zu einer Einrichtung (N) zum Trocknen und Kühlen und zum Verdampfen von in dem verbleibenden Teil (9) enthaltenem Wasser, während dieser (9) getrocknet wird, wodurch ein neutrales und stabiles verfestigtes Material (11) als das Endprodukt erzeugt wird.

**Revendications**

1. Procédé pour le traitement de solutions concentrées provenant d'eaux usées drainées provenant de déchets communaux et industriels, comprenant les étapes consistant à :

   ajouter de l'oxyde de calcium et des produits solidifiés réutilisés à la solution concentrée en créant ainsi un produit solidifié ;

réintroduire dans le processus une portion (8) du produit solidifié créé ; et

enlever la portion restante (9) du produit solidifié créé par un élévateur (L) vers un dispositif (N) pour le séchage et le refroidissement et pour l'évaporation de l'eau contenue dans la portion restante (9) tout en séchant celle-ci (9), en créant de ce fait un produit solidifié neutre et stable (11) à titre de produit final.

Illustration 1

EP 2 504 286 B1

Illustration 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008130208 A1
- GB 2356195 A

- DE 4200598 A1